# EUROPEAN PATENT APPLICATION

(11) **EP 4 517 259 A1**
(43) Date of publication of application: **05.03.2025**
(21) Application number: 23195134.4
(22) Date of filing: 04.09.2023
(51) Int. Cl.: G01C 19/5776, G01C 21/16, G01P 15/00

(54) **INERTIAL MEASUREMENT DEVICE AND METHOD FOR OPERATING A MEASUREMENT DEVICE**

(71) Applicant: Pepperl+Fuchs SE, 68307 Mannheim (DE)
(72) Inventor: Speck, Achim, 68307 Mannheim (DE); Müllek, Sonja, 68307 Mannheim (DE)
(74) Representative: Banse & Steglich Patentanwälte PartmbB

(57) **Abstract**

The invention relates to an inertial measurement device (1) for providing output sensor data according to a force or motion applied on the inertial measurement device (1), comprising:
- a sensor unit (2) including one or more sensor elements (21) for detecting motion and being configured to continuously provide motion sensor data samples for each of the sensor elements (21a, 21b);
- a processing unit (4, 5) for filtering data depending on or corresponding to the motion sensor data samples obtained by the sensor elements (21) in order to provide the output sensor data, wherein the processing unit is configured to select one or multiple filter parameter sets determined by at least one predetermined rule applied on the sensor data samples and to filter the data based on the selected filter parameter set.

## Description

### Technical field

The present invention relates to inertial measurement devices (IMU) for measuring inertial (linear(translational) acceleration), angular velocity, and/or angular acceleration in one or more dimensions. The present invention particularly relates to inertial measurement devices including a preprocessing of raw sensor signals including data cleaning, filtering, and the like.

### Technical background

IMUs are applied in various applications such as for tilting sensors, navigation purposes in mobile devices, and the like. Particularly, IMUs are commonly used in guidance systems utilized in vehicles, providing an independent and alternative source for navigation.

A standard IMU may be implemented with one or more sensor units which may be integrally implemented as MEMS-based units, The sensor units do usually include spring-biased masses which are capacitively coupled to provide a variable capacitance output depending on a motion-induced force, such as an inertial force or centripetal force, being exerted thereon. The variable capacitance is conventionally measured to provide an electrical sensor signal in the form of e.g. a voltage signal or the like.

Usually, the electrical sensor signals provided by the sensor unit are raw sensor signals. As the sensing of the sensor unit is sensitive over a wide range of physical conditions, such as temperature, ambient pressure, mechanical stress, magnetic/electromagnetic fields, cross-talking or the like, the raw sensor signals have to be preprocessed to obtain clean output sensor data, which can be used for downstream applications. Therefore, in close proximity, a preprocessing unit is coupled with the sensor unit to allow calibration, re-calibration, and/or filtering of the raw sensor signals. Preprocessing may conventionally include a compensation of the raw sensor signals, which allows for correcting misalignment of the sensing unit, and for applying a scaling factor and an offset for correcting a sensing mismatch. Such compensation may be defined by a compensation table to store the relevant compensation parameters.

Furthermore, preprocessing may include filtering of the raw sensor signals, particularly to reduce or eliminate dynamic influences, such as from high-frequency vibrations or the like. Filters may be parametrized by filter parameters. Usually, the compensation table and the filter parameters are determined by calibration, however, due to the high sensitivity of the measurement of sensor signals on ambient physical conditions, accurate sensor signals cannot be obtained under all operating situations.

Also, the sensor device may be exposed to different dynamic conditions which may require an online adaptation of filter parameters to provide output sensor data which are appropriate to be used as is in the downstream application.

It is an object of the present invention to provide an improved inertial measurement device which allows obtaining output sensor data well adapted to the dynamic conditions the device is exposed to and considering variable operating conditions.

### Summary of the invention

This object has been achieved by the inertial measurement device with adaptive filtering according to claim 1 and by the method for operating an inertial measurement device according to the further independent claim.

Further embodiments are indicated in the depending subclaims.

According to a first aspect, an inertial measurement device for providing output sensor data according to a force or motion applied on the inertial measurement device is provided, comprising:
- a sensor unit including one or more sensor elements for detecting motion and being configured to continuously provide motion sensor data samples for each of the sensor elements;
- a processing unit for filtering data depending on or corresponding to the motion sensor data samples obtained by the sensor elements in order to provide the output sensor data, wherein the processing unit is configured to select one or multiple filter parameter sets determined by at least one predetermined rule applied on the sensor data samples and to filter the data based on the selected filter parameter set.

According to a further embodiment, the processing unit may comprise:
- a filter unit with at least one filter element which is parametrized with filter parameters of a selected filter parameter set and configured to provide output sensor data depending on the motion sensor data samples and the applied filter parameters;
- a filter parameter unit including a rule-based filter determination unit configured to provide one of multiple preset filter parameter sets to the filter element in response to the motion sensor data samples obtained by the sensor elements according to a given set of rules.

According to a further embodiment, an inertial measurement device for providing output sensor data according to a force or motion applied on the inertial measurement device is provided, comprising:
- a filter unit with multiple filter elements each parametrized with filter parameters of a respectively predetermined filter parameter set and each configured to provide filtered data depending on the motion sensor data samples and the applied filter parameters, wherein the filter unit comprises a selection unit to select at least one of the filter elements to output the filtered data as output sensor data;
- a filter parameter unit including a rule-based filter determination unit configured to select one of the multiple filter elements to output output sensor data by means of the selection unit.

Furthermore, the sensor unit may further comprise one or more operating sensor elements, which particularly include at least one of a temperature sensor, an ambient pressure sensor, a mechanical stress sensor, a magnetic sensor, and an electromagnetic field sensor, wherein the sensor unit is configured to provide operating sensor data samples for each of the operating sensor elements wherein the processing unit respectively the filter parameter unit is configured to receive the operating sensor data samples and to provide filter parameters to the filter unit or select one of the multiple filter units depending on the operating sensor data samples, respectively.

The filter unit may comprise as filter element at least one of a complementary filter and a Kalman filter.

For instance, filter parameters may include at least of one of: a time constant, one or more elements of a state transition matrix of a Kalman filter, one or more elements of a control input matrix of a Kalman filter, one or more elements of a measurement matrix of a Kalman filter, a Kalman gain of a Kalman filter, zero location(s) of a compensation filter, pole location(s) of a compensation filter, a proportional gain of a compensation filter, an integral gain of a compensation filter, and a derivative gain of a compensation filter.

The inertial measurement device may be continuously operated in succeeding sampling cycles, in which the sensor signals of the motion sensor elements are sampled and digitalized.

Substantially, the inertial measaurement device comprises a sensing unit with one or more sensing elements, such as motion sensors, e.g., accelerometers, gyroscopes and the like and a preprocessing unit including a filter unit with one or more filter elements appropriate to be applied to all sensor data which originate from the one or more sensing elements.

By means of the filter parameter unit, the filter unit is permanently adapted to the operating conditions of the inertial measurement device. The filter parameter unit is operated continuously and configured to select a set of filter parameters from a variety of preset filter parameter sets in response to motion sensor data samples and optionally to one or more operating sensor data samples.

The filter parameter unit applies rules on the sensor data samples, optionally including the one or more operating sensor data samples to select the most appropriate filter parameter set for the filter unit.

It may be provided that a rule database is configured to provide multiple sets of rules each associated with one of the multiple filter parameter sets wherein at least one of the rules being defined with a threshold, wherein in the rule-based filter determination unit is configured to retrieve the multiple sets of rules and to evaluate the sets of rules wherein particularly the result of the evaluations is associated with a filter parameter set to be applied to the one filter unit or a selection of the one of the multiple filter units, particularly by use of a lookup table.

Furthermore,at least one of the rules may depend on one of:
- an actual value of the sensor data sample of one or more of the motion sensor elements;
- an actual value of the sensor data sample of one or more of the operating sensor elements,
- a maximum or minimum value of sensor data samples of one or more of the motion sensor elements within a given number of between 2 and 10 of the most recent sensor data samples;
- a maximum or minimum value of sensor data samples of one or more of the motion sensor elements within a given number of between 2 and 10 of the most recent sensor data samples,
- a derivative of the most actual sensor data sample of one or more of the motion sensor elements;
- a derivative of the most actual sensor data sample of one or more of the operating sensor elements,
- an integral of the most actual sensor data sample of one or more of the motion sensor elements;
- an integral of the most actual sensor data sample of one or more of the operating sensor elements,
- a maximum gradient of the characteristics of the sensor data samples within a given number of the most recent 2 to 10 sensor data samples,
- a sliding average of a number of 2 to 10 most recent sensor data samples of a respective of the motion sensor elements; and
- a sliding average of a number of 2 to 10 most recent sensor data samples of a respective of the operating sensor elements.

For instance, for the sensor data samples, the rules may apply to actual values of the sensor data or the value of a sliding average of a number of the most recent sensor data samples. Particularly, the thus obtained comparison sensor data values can be evaluated by a comparison with a respectively given threshold which determines about the filter parameter set to be selected. Basically, the filter parameter set is selected of results of comparisons with respectively given thresholds, e.g. by means of a lookup table and the like. The filter parameter sets each determine a number of filter parameters which are to handle dynamic characteristics of the sensor data samples. For instance, a translatory acceleration which has been determined over a given threshold may lead to a filter parameter of a time constant to reduce the dynamic impact of the sensor data.

Furthermore, the filter parameter unit may be configured to prohibit an application of newly selected a filter parameter set before a given dead time has expired after a time of change of the selection of the filter parameter set. So, the filter parameter unit may further be configured to apply a dead time after a change of a filter parameter set depending on a change of the dynamics according to the motion sensor data samples and optionally of the one or more operating sensor data samples. The dead time may be in a range of 0.1 to 20 s, preferably in the range of 0.5 s to 4s, more preferably between 0.1 to 5 s. Within the dead time, the rule-based determination of the filter parameter set determination or selection is suspended to avoid numerous changes between the filter parameter sets within a short time period. This serves to avoid artifacts in the resulting output sensor data characteristics.

However, it may be provided that the dead time is disregarded and that a change of the filter parameter set is allowed if one or more of the rules determines that a comparison sensor data value exceeds the given threshold by more than a predetermined amount, such as by more as 100% of the comparison sensor data value, or undergoes the given threshold by more than 50% of the comparison sensor data value.

Furthermore, it may be provided that one or more of the filter parameters of a determined or selected filter parameter set is ramped to a new value of a respective filter parameter by a given slope to avoid abrupt changes of the filter behavior.

According to a further embodiment, the filter unit may be formed by a number of filters, each being operated with a different filter parameter set which are continuously calculated simultaneously. After each cycle, the actual sensor data is evaluated in the filter parameter unit and the corresponding output sensor data of one of the filter units is selected and provided as an output sensor data of the IMU.

Furthermore, if a change of the filter parameter sets has been determined, the filter unit being previously selected (corresponding to the previous filter parameter set) and the filter unit being newly selected (corresponding to the newly determined filter parameters) may be used to generate the value of the output sensor data value such as an average between the values of the two filter unit output data such as to avoid an unexpected behavior of the output sensor data. Further, a selection of the most plausible result within the two different results can be determined, based on previous data.

It may be provided that a compensation unit is provided to preprocess the motion sensor data samples to compensate for systematic sensor errors.

According to an embodiment, a smoothing element may be configured to low pass filter the output sensor data samples or to ramp the output sensor data samples depending on a change of the applied filter parameter set or the selected filter element, respectively.

It may be provided that the filter parameter unit is configured to provide a ramping from the previous value of the one or more filter parameters to the newly determined value of the one or more filter parameters may be made over a number of 2 to 10 sampling cycles when the respective one or more filter parameters change.

### Brief description of the drawings

Embodiments are described in more detail in conjunction with the accompanying drawings, in which:
- Figure 1: shows an inertial measurement device according to embodiments of the present invention;
- Figure 2: shows a functional diagram of a parameter model for a filter unit of the inertial measurement device according to Figure 1;
- Figure 3: shows an inertial measurement device according to another embodiment of the present invention.

### Description of embodiments

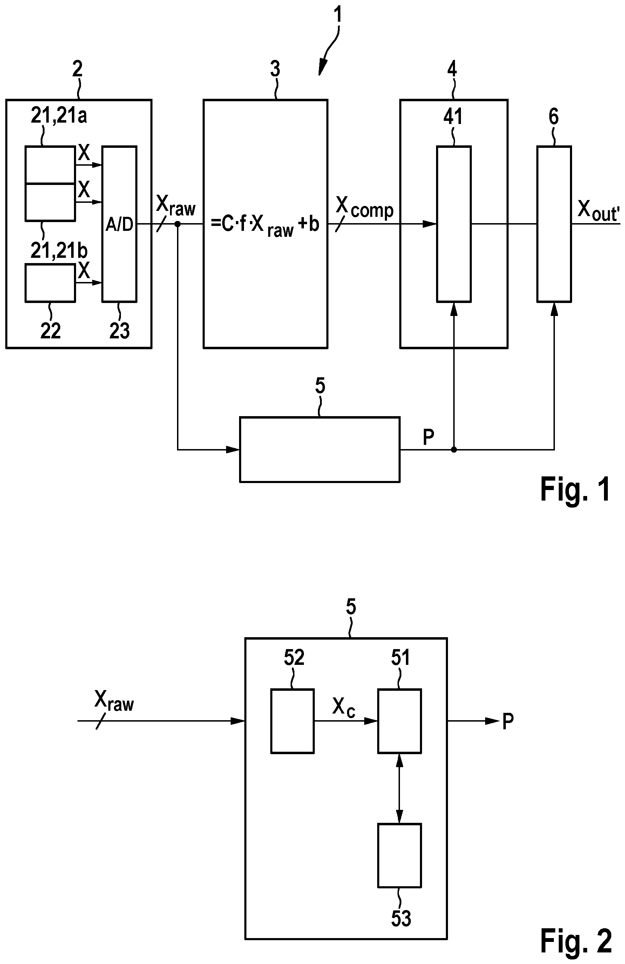

Figure 1 schematically shows an inertial measurement device 1 including a sensor unit 2 comprising one or more sensor elements 21. The sensor elements 21 may be substantially formed as motion sensors, such as accelerometers 21a, gyroscopes 21b or the like, which may provide sensor signals in up to three dimensions. For example, the accelerometers 21a comprise a 3-axis accelerometer that measures the acceleration of the rate of the change of the velocity along the x-, y- and z-axis of the IMU 1.

The motion sensors 21a, 21b can be formed with a spring-biased inertial mass which is moveable under the impact of force exertion. The movement of the inertial mass can be detected using a physical effect. For example, a capacitance change can be measured which depends on the quantity of the applied force. The measurement may provide a voltage, current or frequency signal as an electrical sensor signal x, respectively. Other physical effects for measuring forces caused by the inertial of masses can be applied as well and any kind of electrical signal can be provided. Output sensor data can further be an angle and/or a compensated angle and/or other raw.

Furthermore, operating condition sensor elements 22, which are non-motion sensors, can be included in sensor unit 2 to detect the operating conditions of the inertial measurement device 1. The operating condition sensors elements 22 may include one or more of a temperature sensor, an ambient pressure sensor, a mechanical stress sensor (for measuring strain), a magnetic/electromagnetic field sensor (e.g. for measuring the magnetic field of earth or EMV influence), or the like.

By means of an analog-digital converter 23 the sensor signals x from sensors 21a, 21b, and 22, which are basically provided as analog electrical signals X, are sampled and digitalized to provide information of the sensor signals as raw sensor data samples X_{raw} at an output of the sensor unit 2. The raw sensor data samples X_{raw} may include motion sensor data samples related to the motion sensors 21a, 21b and operating sensor data samples related to the operating sensor (s) 22. In the operation of the IMU 1, the raw sensor data samples X_{raw} are supplied as a data stream of successive sampling cycles with a sampling rate that can be in the range of low-frequency of several Hz up to hundreds of kHz.

The raw sensor data samples X_{raw} may be supplied to an optionally provided compensation unit 3 which can be hardware and/or software implemented. In the compensation unit 3 a precalibrated compensation of the raw sensor data samples X_{raw} is performed. The compensation may be performed according to a calibrated compensation table which includes scale factors f, bias values b for each of the sensor elements 21a, 21b, and a misalignment matrix C for correcting misalignment of the sensor elements 21a, 21b which allow for compensating of systematic sensor errors. Particularly, a compensated sensor data samples X_{comp} may e.g. be obtained as X_{comp} =C*f* X_{raw} +b with b being a given offset compensation.

The compensated sensor data samples X_{comp} may be then supplied to a filter unit 4 which can be hardware and/or software implemented. The filter unit 4 may include one or more filters 41 to filter the compensated sensor data samples X_{comp}. In other embodiments the raw sensor data samples X_{raw} may be directly supplied to the filter unit 4 where no compensation of the raw sensor data samples X_{raw} shall be made.

For instance, filter unit 4 may include a complementary filter and/or a Kalman filter and/or any other signal processing(s) as specific filter elements 41. The type of filter element 41 can be selected according to a given filter parameter, and the filter element 41 itself can be parametrized by filter parameters. The kind of filtering is determined by the filter parameters of a given filter parameter set. The output of the filter element 41 may be directly output at the output of the inertial measurement device 1 as output sensor data samples Xₒᵤₜ.

Moreover, the output sensor data samples Xₒᵤₜ may be supplied to a smoothing element 6 which is configured to depending on a change of the filter parameter set P to low pass filter the output sensor data samples Xₒᵤₜ of the filter element 41 or to ramp the output of the filter element 41. This allows to smoothen a sudden change of the output of the filter element 41 when a change of the filter parameter set and so a change of the filtering behavior occurs.

The filter element 41 may be operated based on filter parameters. For instance, the filter parameters may be time constant or the like. For a Kalman filter as filter element, the filter parameters may include at least one of: one or more elements of a state transition matrix, one or more elements of a control input matrix, one or more elements of a measurement matrix, and/or a Kalman gain. As a compensation filter, a lead compensator, a lag compensator, a lead-lag compensator or a PID controller may be applied. For the compensation filter as filter element, the filter parameters may include at least one of: zero location(s), pole location(s), proportional gain, integral gain, and derivative gain.

Furthermore, a filter parameter unit 5 may be provided which includes a rule-based filter determination unit 51. The filter determination unit 51 may be implemented in hardware and/or software. The filter determination unit 51 may be provided with access to predetermined filter parameter sets defining filter parameters to configure the filter element 41. The filter parameter sets may be associated with selection criteria so that according to the result of the application of rules onto one or more comparison sensor data values X_{c}, a filter parameter set to be applied is selected.

The association between the results of the application of rules and the filter parameter set to be applied may be made by means of a stored lookup table 53. The lookup table 52 may be preconfigured and stored in the filter parameter unit 5.

The filter parameter unit 5 receives the sensor data X_{raw} including the inertial values of linear and/or angular acceleration and/or angular velocities, and operating parameters such as the temperature of the inertial measurement device 1 as well as the measurement of further operating conditions, such as ambient pressure, mechanical stress, magnetic/electromagnetic field exposure, or the like. Alternatively, the filter parameter unit 5 may receive the compensated sensor data samples X_{comp}.

The comparison sensor data values X_{c} are each associated to a sensor element 21a, 21b, 22 and may each correspond to or may each be directly derived from one or more timely successive sensor data samples X_{raw} (of one motion sensor 21a, 21b or operating sensor 22) in a comparison value unit 52.

For instance, the actual value of a sensor data sample of one or more motion sensor elements 21a, 21b or operating sensor element 22 can be used as a comparison sensor data value. Moreover, at least one of the comparison sensor data values may correspond to a maximum or minimum value of a sensor data sample (for one sensor 21a, 21b, 22) within a given number of the respective most recent sensor data samples or a derivative of the most actual sensor data sample (for one sensor 21a, 21b, 22). Furthermore, a comparison sensor data value may be determined by a maximum gradient of the sensor data characteristics within the most recent time interval of a number of 2 to 20 sensor data samples (for one sensor 21a, 21b, 22). Moreover, a sliding average of a number of e.g. 2 to 10 most recent sensor data samples related to the respective sensor element 21a, 21b, 22 may be used as the comparison sensor data value. The comparison sensor data value for each of the sensor data elements, e.g., related to the acceleration along the x-axis, may be applied to a rule which may be in a form of a threshold comparison with a given threshold value.

The following table illustrates the selection of the filter parameter set based on a rule-based scheme evaluating the sensor data:

| Comparison values | Rule | Parameter set |
|---|---|---|
| Acceleration along x-axis (Acc_x) and y-axis (Acc_y) | Acc_x > Threshold a AND Acc_y < Threshold b | 1 |
| Rate of acceleration along x-axis (Rate_x) and y-axis (Rate_y) and z-axis (Rate_z) | Rate_x < Threshold c OR (Rate_y + Rate_z) > Threshold d | 2 |
| Acceleration along x-axis (Acc_x) and y-axis (Acc_y); Rate of acceleration along x-axis (Rate_x) and y-axis (Rate_y) and z-axis (Rate_z) | Acc_x <= Threshold e AND Acc_y >= Threshold f AND Rate_x & Rate_y > Threshold g | 3 |
| Temperature | Temperature < Threshold h | 4 |
| Acceleration along x-axis (Acc_x) and y-axis (Acc_y); Rate of acceleration along x-axis (Rate_x) and y-axis (Rate_y) and z-axis (Rate_z); Temperature; Humidity | Acc_x <= Threshold I AND Acc_y >= Threshold j AND Max (Acc_z)* specific_factor < Threshold k AND Temperature < Threshold I AND Humidity > Threshold m | 5 |

Thresholds a to m are given thresholds as associated to the specific rules.

In general, thresholds for the respective axes can be different within each set of rules.

The filter parameter unit 5 may further provide a functionality, wherein after a change of the selection of the filter parameter set, a next change of the filter parameter set is prohibited before a given dead time has expired. The given dead time may be between 0.5 and 4 s and is considered to avoid unstable conditions due to multiple changes of the filtering behavior within a too short time period.

However, if one of the thresholds of the rule-based scheme is exceeded or undergone by more than a given amount of e.g. 50%, dead time functionality may be suspended, and the filter parameter set is immediately changed according to the filter parameter set as determined by the rule-based filter parameter unit 5 or onto a default parameter set.

When a new selection of the filter parameter set occurs, the filter parameter unit 5 may provide a ramping between one or more of the filter parameters such as a time constant so that when the respective one or more filter parameters change, a (linear) ramping from the previous value of the one or more filter parameters to the newly determined value of the one or more filter parameters may be made over a number of 2 to 10 sampling cycles.

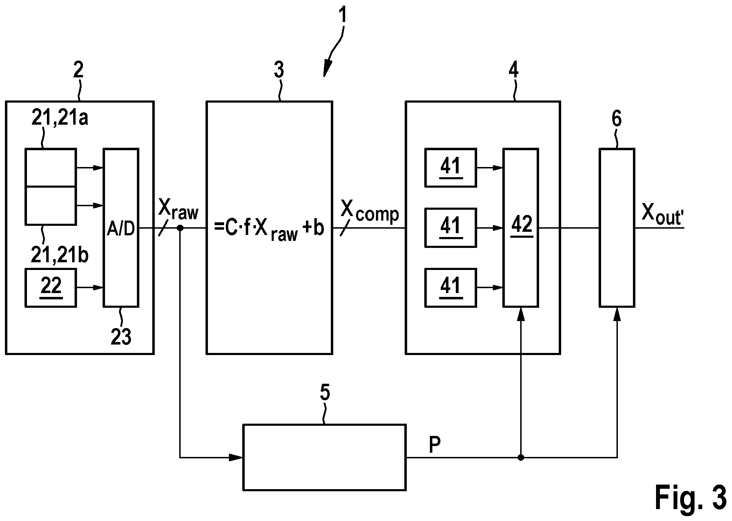

Furthermore, according to a different embodiment as shown in Figure 3, a multiple filter elements 41 may be used. The embodiment of Figure 3 substantially resembles the embodiment of Figure 1 as indicated by the same reference signs. In difference, each of the filter elements 41 calculate individual filtered data samples according to an associated one of the predetermined filter parameter sets simultaneously within a single sampling cycle. The filtered data samples of each filter element 41 are applied to a selection unit 42. So the filter parameter unit 5 is configured to control the selection unit 42 so that depending on the result of applying the set of rules, one of the filter elements 41 is selected to output the filtered data samples obtained with the respective filter parameter set as output sensor data samples.

## Claims

1. Inertial measurement device (1) for providing output sensor data according to a force or motion applied on the inertial measurement device, comprising:
- a sensor unit (2) including one or more sensor elements (21) for detecting motion and being configured to continuously provide motion sensor data samples for each of the sensor elements (21a, 21b);
- a processing unit (4, 5) for filtering data depending on or corresponding to the motion sensor data samples obtained by the sensor elements (21) in order to provide the output sensor data (Xₒᵤₜ), wherein the processing unit is configured to select one or multiple filter parameter sets determined by at least one predetermined rule applied on the sensor data samples and to filter the data based on the selected filter parameter set.

2. Inertial measurement device (1) according to claim 1, wherein the processing unit comprises:
- a filter unit (4) with at least one filter element (41) which is parametrized with filter parameters of a selected filter parameter set and configured to provide output sensor data (Xₒᵤₜ) depending on the motion sensor data samples and the applied filter parameters;
- a filter parameter unit (5) including a rule-based filter determination unit (51) configured to provide one of multiple preset filter parameter sets to the filter element (41) in response to the motion sensor data samples obtained by the sensor elements (21) according to a given set of rules.

3. Inertial measurement device (1) according to claim 1, wherein the processing unit comprises:
- a filter unit (4) with multiple filter elements (41) each parametrized with filter parameters of a respectively predetermined filter parameter set and each configured to provide filtered data depending on the motion sensor data samples and the applied filter parameters, wherein the filter unit (4) comprises a selection unit (42) to select at least one of the filter elements (41) to output output sensor data (Xₒᵤₜ) depending on or corresponding to the filtered data provided by the at least one filter elements (41);
- a filter parameter unit (5) including a rule-based filter determination unit configured to select one of the multiple filter elements (41) to output output sensor data (Xₒᵤₜ) by means of the selection unit (42).

4. Inertial measurement device (1) according to any of the claims 2 to 3, wherein the filter unit (4) comprises as filter element (41) at least one of a complementary filter and a Kalman filter.

5. Inertial measurement device (1) according to any of the claims 1 to 4, wherein the sensor unit (2) further comprises one or more operating sensor elements (22), which particularly include at least one of a temperature sensor, an ambient pressure sensor, a mechanical stress sensor, a magnetic sensor, an electromagnetic field sensor and a humidity sensor, wherein the sensor unit (2) is configured to provide operating sensor data samples for each of the one or more operating sensor elements (22) wherein the processing unit, particularly the filter parameter unit (5), is configured to receive the operating sensor data samples and to select the filter parameter set according to at least one rule depending on operating sensor data samples of the one or more operating sensor data samples.

6. Inertial measurement device (1) according to any of the claims 1 to 5, wherein filter parameters include at least of one of: a time constant, offset and gain, one or more elements of a state transition matrix of a Kalman filter, one or more elements of a control input matrix of a Kalman filter, one or more elements of a measurement matrix of a Kalman filter, a Kalman gain of a Kalman filter, zero location(s) of a compensation filter, pole location(s) of a compensation filter, a proportional gain of a compensation filter, an integral gain of a compensation filter, and a derivative gain of a compensation filter.

7. Inertial measurement device (1) according to any of the claims 1 to 6, wherein the inertial measurement device (1) is continuously operated in succeeding sampling cycles in which the sensor signals of the motion sensor elements are sampled and digitalized.

8. Inertial measurement device (1) according to any of the claims 1 to 7, wherein a rule database (52) is configured to provide multiple sets of rules each associated with one of the multiple filter parameter sets wherein at least one of the rules being defined with a threshold, wherein in the rule-based filter determination unit (51) is configured to retrieve the multiple sets of rules and to evaluate the sets of rules, wherein particularly the result of the evaluations is associated with a filter parameter set to be applied to the one filter elements (41) or a selection of the one of the multiple filter elements (41), particularly by use of a lookup table.

9. Inertial measurement device (1) according to claim 8, wherein at least one of the rules depends on one of:
- an actual value of the sensor data sample of one or more of the motion sensor elements;
- an actual value of the sensor data sample of one or more of the operating sensor elements,
- a maximum or minimum value of sensor data samples of one or more of the motion sensor elements within a given number of between 2 and 10 of the most recent sensor data samples;
- a maximum or minimum value of sensor data samples of one or more of the motion sensor elements within a given number of between 2 and 10 of the most recent sensor data samples,
- a derivative of the most actual sensor data sample of one or more of the motion sensor elements;
- a derivative of the most actual sensor data sample of one or more of the operating sensor elements,
- an integral of the most actual sensor data sample of one or more of the motion sensor elements;
- an integral of the most actual sensor data sample of one or more of the operating sensor elements,
- a maximum gradient of the characteristics of the sensor data samples within a given number of the most recent 2 to 10 sensor data samples ,
- a sliding average of a number of 2 to 10 most recent sensor data samples of a respective of the motion sensor elements; and
- a sliding average of a number of 2 to 10 most recent sensor data samples of a respective of the operating sensor elements.

10. Inertial measurement device (1) according to any of the claims 8 to 9, wherein the at least one of the rules determines one threshold comparison or a combination of threshold comparisons with a given threshold as a selection criteria.

11. Inertial measurement device (1) according to any of the claims 1 to 10, wherein a compensation unit (3) is provided to preprocess the motion sensor data samples and particularly the operating sensor data to compensate of systematic sensor errors.

12. Inertial measurement device (1) according to any of the claims 1 to 11, wherein a smoothing element (6) is configured to low pass filter the output sensor data (Xₒᵤₜ) or to ramp the output sensor data (Xₒᵤₜ) depending on a detected change of the applied filter parameter set or the selected filter element (41), respectively.

13. Inertial measurement device (1) according to any of the claims 1 to 12, wherein the filter parameter unit (5) is configured to prohibit an application of newly selected a filter parameter set before a given dead time has expired after a time of change of the selection of the filter parameter set.

14. Inertial measurement device (1) according to any of the claims 1 to 13, wherein the filter parameter unit (5) is configured to provide a ramping from the previous value of the one or more filter parameters to the newly determined value of the one or more filter parameters may be made over a number of 2 to 10 sampling cycles when the respective one or more filter parameters change.
